# EUROPÄISCHE PATENTSCHRIFT

(11) **EP 1 051 075 B1**
(45) Veröffentlichungstag und Bekanntmachung des Hinweises auf die Patenterteilung: **21.04.2004**
(21) Anmeldenummer: 99904810.1
(22) Anmeldetag: 25.01.1999
(51) Int. Cl.: A01N 65/00

(54) **BIOLOGISCHES PFLANZENSCHUTZMITTEL MIT RESISTENZFÖRDERNDER WIRKUNG UND VERFAHREN ZU SEINER HERSTELLUNG**
BIOLOGICAL PLANT PROTECTION AGENT WITH RESISTANCE-PROMOTING ACTION AND METHOD FOR PRODUCING SAME
AGENT PHYTOPROTECTEUR BIOLOGIQUE RENFORCANT LA RESISTANCE DES VEGETAUX, ET SON PROCEDE DE PRODUCTION

(30) Priorität: 01.02.1998 DE 19803630
(43) Veröffentlichungstag der Anmeldung: 15.11.2000
(73) Patentinhaber: Polus, Horst, 64678 Lindenfels (DE)
(72) Erfinder: SCHNABL, Heide, D-53343 Wachtberg-Villip (DE); POLUS, Gudrun, L., D-64678 Lindenfels (DE)
(74) Vertreter: Benz, Jürgen, Dr.
(86) Internationale Anmeldenummer: PCT/EP1999/000459
(87) Internationale Veröffentlichungsnummer: WO 1999/038379

(56) Entgegenhaltungen:
- DATABASE CABA [Online] NORONHA ET AL.: "Virus inhibitors. Use of natural substances" XP002103834 & ARBORICULTURE FRUITI RE, Nr. 482, 1995, Seiten 17-20,

## Beschreibung

Die Erfindung betrifft ein neues und neuartiges biologisches Pflanzenschutzmittel. Das Pflanzenschutzmittel basiert selbst auf einer spezifischen Pflanzenzubereitung und bewirkt neben pflanzenstärkenden Effekten vor allem eine generelle, überraschend intensiv ausgeprägte Resistenzinduktion bei Nutz- und Kulturpflanzen gegenüber pathogenen Einflüssen vielerlei Art, insbesondere gegenüber dem Befall durch Bakterien, Pilze und sogar Viren. Das erfindungsgemäße Mittel ist hochwirksam aber in jeder Beziehung untoxisch und unterscheidet sich somit von den klassischen zumeist auf chemisch synthetisierten Verbindungen beruhenden Pflanzenschutzmitteln, wie Pestizide oder Fungizide, welche häufig aufgrund ihrer Toxizität in vielen Ländern gesetzlichen Bestimmungen unterworfen sind.
Die Erfindung betrifft auch die dem Pflanzenschutzmittel zugrundeliegende pflanzliche Zubereitung und ein Verfahren zu ihrer Herstellung sowie ein Verfahren zur schnellen Feststellung der biologischen Wirksamkeit entsprechender pflanzlicher Zubereitungen, bzw. Extrakte *in vitro*.
Die Erfindung betrifft ferner die Verwendung der besagten Zubereitung zur Verbesserung belasteter Böden durch Stärkung der ansässigen mikrobiellen Bodenkulturen. Die Erfindung betrifft schließlich auch Stoffe, die in der erfindungsgemäßen Zubereitung aufgefunden wurden, und die den beschriebenen Wirkungen zugeschrieben werden können oder einen Beitrag hierzu leisten.

Pflanzenkrankheiten bei Kultur- bzw. Nutzpflanzen, beziehungsweise ihre Bekämpfung, stellen eine immer größer werdende Herausforderung dar. Durch derartige Krankheiten sowie durch umwelt- und / oder klimabedingte Streßfaktoren, wie beispielsweise ausgeprägte Trocken- bzw. Dürreperioden oder saure, überdüngte oder anderweitig schadstoffbelastete Böden müssen Jahr für Jahr weltweit beachtliche Ertragsverluste hingenommen werden, oder es gehen in unter Umständen ganze Kulturlandschaften verloren. Oft bedingen und verstärken schädliche Umwelt- und Klimaeinflüsse die Ausbreitung entsprechender Krankheiten, da die Pflanzen unter einem permanenten Streß stehen und so in ihrer natürlichen Abwehrkraft geschwächt werden.

Pflanzenkrankheiten werden heute überwiegend mit herkömmlichen, chemischen Pflanzenschutzmitteln, wie beispielsweise Pestizide oder Fungizide, bekämpft. Damit lassen sich zunächst rasche und gute Erfolge erzielen, da solche Mittel meist sehr wirksam sind und überdies meist preisgünstig und mit einfachen technischen Mitteln hergestellt werden können, so daß sie insbesondere für die Dritte Welt von Interesse sind. Herkömmliche chemische Pflanzenschutzmittel weisen aber auch beträchtliche, weitreichende Nachteile auf, so daß ihr Einsatz von der Öffentlichkeit zumindest in den industrialisierten Ländern zunehmend kritisch betrachtet wird. So ist ein Nachteil des chemischen Pflanzenschutzes die Selektion resistenter Erregerstämme, die bei der Pilzbekämpfung mit der Einführung der systemischen Fungizide entstanden sind und entstehen. Solche Stämme können oft nur mit noch toxischeren Mitteln bekämpft werden. Pflanzenfungizide verhalten sich somit analog Antibiotika in der Medizin, wo das Resistenzproblem bereits sehr virulent ist. Überdies sind nicht alle Pflanzenkrankheiten, wie z. B. Gefäßmykosen, Virosen oder Bakteriosen mit den bisher bekannten Mitteln erfolgreich zu behandeln. Ein weiterer Nachteil von chemischen Pflanzenschutzmitteln ergibt sich aus ihrer bereits erwähnten oft beträchtlichen Toxizität, die nicht nur ihre Handhabbarkeit sondern auch ihre Auswirkung auf die Umwelt (Böden, Trinkwasser, etc.) betreffen. Über die Nahrungskette können sie oder ihre zum Teil ebenfalls toxischen Metabolite auch vom Menschen aufgenommen werden und zu teilweise irreversiblen körperlichen Schäden oder Krankheiten führen. Demzufolge unterliegen Pflanzenschutzmittel in vielen Ländern der Zulassungspflicht und werden von den Behörden immer restriktiver behandelt.

Als eine echte Alternative zu chemischen Pflanzenschutzmitteln werden biologische Mittel auf Basis von Mikroorganismen, Pflanzen, Pflanzenextrakten oder einzelnen isolierten Wirkstoffen oder Wirkstoffgemischen betrachtet, obwohl sie in der Praxis aus verschieden Gründen noch keine größere Rolle spielen. Beispiele hierfür sind die Behandlung von Gurken und Melonen gegen Anthraknose mit Extrakten von *Colletotrichum lagenarium* (Caruso, Kuc, 1977, Phytopathology 67, 1285), welches selbst der Erreger der Anthraknose ist. Tabak konnte in Feldversuchen gegen Blauschimmel weitgehend durch Behandlung mit Sporensuspensionen von *P. tabacina* geschützt werden (Tuzun, Kuc, 1989, in: McKeen (Ed.), Blue mold of tobacco, 177, APS Press, St. Paul Minnesota). Weiterhin sind Extrakte aus Blättern von Staudenknöderich (*Reynoutria sachalinenis*) gegen Pflanzenschimmel bekannt (Herger et al., 1989, Nachr. Blatt. Dt. Pflanzenschutzdienst 40, 56). Auch über die Schutzwirkung von bestimmten Bakterien- und Pilzsubstraten auf höhere Nutzpflanzen wurde schon berichtet (Schönbeck et al., 1980, Z. PflKrankheiten, PflSchutz 87, 654). Weiterhin sind auch definierte in der Natur vorkommende Einzelverbindungen wie Salicylsäure oder Acetylsalicylsäure (z.B. Mills, Wood, 1984, Phythopathol., 111, 209) oder Isonicotinsäure bzw. Isonicotinsäurederivate (Kunz et al., 1988, EP 0026875) bekannt, für die eine Schutzwirkung gegenüber Pflanzen gezeigt werden konnte. Aus Neronha et al. (1995, L'Arboriculture Fruitière 482, S. 17-20) ist bekannt, dass Extrakte aus bestimmten Pflanzen oder Pflanzentellen aus der Familie Caryophyllaceae eine gewisse Resistenz induzierende Aktivität aufweisen; jedoch wurde eine synergistische Wirkung einer entsprechenden Kombination mit anderen Pflanzen nicht gezeigt.

In einigen der bekannten Beispiele des Pflanzenschutzes durch biologische Mittel wurde der Schutz durch induzierte Resistenz bervorgerufen bzw. bewirkt.
Unter dem Begriff der induzierten Resistenz einer Pflanze oder auch eines Mikroorganismus versteht man allgemein die Befähigung des beneffenden Organismus, die Entfaltung der Wirkung von schädigenden Faktoren durch bestimmte äußere Behandlungen oder Stoffe zu hemmen, ohne die genetische Konstitution des Organismus m verändern. Die Widerstandsfähigkeit des Organismus wird generell und dauethaft erhöht, was zu einer Verminderung der Befallsintensität sowie der Schadwirkung des noch verbleibenden Befalls führt. Induzierte Resistenz zeichnet sich unter anderem vor allem durch fehlende Toxizität der die Resistenz induzierenden Stoffe gegenüber den schädigenden Stoffen, bzw. Schadorganismen (Pathogen), sowie durch das Fehlen einer strengen, linearen Dosis-Wirkungsrelation aus. Eine weitere Konsequenz der induzierten Resistenz bei einer Pflanze kann auf molekularer Ebene beobachtet werden und betrifft die Expression verschiedener Proteine, die nach dem Pathogenbefall bzw. Pathogenkontakt, bzw. dem Kontakt mit dem an sich nicht pathogenen, die Resistenz induzierenden Stoff gebildet und als PR-Proteine ("pathogenesis related proteins") bezeichnet werden. Zu ihnen gehören unter anderem PR-1 Proteine, β-1,3-Glucanasen (PR-2), Chitinasen (PR-3), Hevein- (PR-4) und Thaumatin/Osmotin- ähnliche Proteine (PR-5) (Schneider et al., 1996, Intern. Review of Cytology 168, 303). In vielen Fällen der induzierten bzw. erworbenen Resistenz kann beobachtet werden, daß der Effekt nicht nur auf die Stelle lokalisiert bleibt, welche mit dem die Resistenz induzierenden Stoff bzw. dem Pathogen direkt in Kontakt gekommen ist, sondern sich systemisch auch auf nicht befallene, noch gesunde Pflanzenteile ausbreitet. Durch Resistenzinduktuion wird also ein bereits latent in der Pflanze vorhandenes Potential an unterschiedlichen Abwehrmechanismen dauerhaft aktiviert, welche wiederum abhängig von der Pflanzenart und dem attackierenden Schadstofferreger, bzw. dem die Resistenz induzierenden Stoff, sind. Letztlich ist diese Möglichkeit der Pflanze sich zu wehren, im gewissen Sinn vergleichbar mit der medizinischen Immunisierung beim Menschen durch aktive Impfung. Für den Pflanzenschutz ist die induzierte Resistenz von erheblicher Bedeutung, weil es die Palette seiner Möglichkeiten erweitert und Krankheiten erfassen kann, die einer Bekämpfung mittels der herkömmlichen, oben genannten chemischen Mittel nicht zugänglich sind.
Davon zu unterscheiden sind Mittel, die eine rein pflanzenstärkende Wirkung aufweisen. Pflanzungsstärkungsmittel zeichnen sich durch eine vorübergehende Kräftigung des betreffenden Organismus aus, ohne die immunisierende Wirkung über erworbenen bzw. induzierte Resistenz aufzuweisen.
Biologische Pflanzenschutzmittel sind also eine echte Alternative zu herkömmlichen chemischen, meist stark toxischen Pestiziden, Fungiziden und ähnlich wirkenden Mitteln, da letztere, wie bereits erwähnt, zunehmend restriktiver in bezug auf behördlicher Zulassung behandelt werden und auf Ablehnung in der breiten, ökologisch sensibilisierten Öffentlichkeit stoßen.

Die bislang bekannten biologischen Mittel sind aber oft schwer zu handhaben (wenn sie z. B. auf dem Krankheitserreger selbst basieren, wie beispielsweise Suspensionen von Pilzen oder Bakterien), lassen sich oft nicht einfach in ausreichenden Mengen für den breiten Einsatz in der Land- oder ökologischen Wirtschaft herstellen, sind teilweise nicht spezifisch genug oder weisen sehr oft eine unzureichende Wirkungsintensität gerade im Vergleich mit herkömmlichen Pflanzenschutzmitteln auf. Insbesondere bei Pflanzen, die schon befallen und geschädigt sind, werden die wenigen bekannten, biologischen Mittel kaum eingesetzt, da sie in solchen Fällen wenig und oft erst zu spät Wirksamkeit zeigen. Der Einsatz solcher bekannten biologischen Pflanzenschutzmittel oder Pflanzenstärkungsmittel beschränkt sich somit in der Praxis zumeist allenfalls nur auf die prophylaktische Behandlung, oder wenn die allerersten Anzeichen eines Befalls erkennbar sind und auch dann in der Regel nur auf kleine Pflanzenbestände.

Es bestand somit die Aufgabe ein biologisches Pflanzenschutzmittel zur Verfügung zu stellen, daß nicht die oben genannten Nachteile der bekannten biologischen und chemischen Pflanzenschutzmittel aufweist und überdies nicht nur ein reines Pflanzenstärkungsmittel ist. Insbesondere sollte ein Mittel bereitgestellt werden, welches relativ einfach herzustellen und in möglichst geringen Konzentrationen hochwirksam ist sowie für ein breites Spektrum von Pflanzen und Pflanzenkrankheiten auch bei großen Pflanzenbeständen angewendet werden kann.

Erfindungsgemäß kann ein solches Mittel zur Verfügung gestellt werden. Es basiert auf einer pflanzlichen Zubereitung, die leicht herzustellen ist.

Gegenstand der Erfindung ist somit eine Zubereitung auf Basis von Pflanzen, Pflanzenteilen oder Samen aus (a) der Familie der Nelkengewächse, ausgewählt aus der Gruppe der Arten Pechnelke *(Viscaria vulgaris*, Kuckuckslichtnelke (*Lychnis flos-cuculi*), Rote Lichtnelke, Nachtnelke, Prachtnelke, Karthäusernelke oder Leimkraut und (b) Luzernarten, in Form eines pulverförmigen Gemisches, wobei der Gewichtsanteil des Pulvers, welches aus den Nelkenarten stammt, über 80 % aber unter 99% liegt, erhältlich durch folgende Schritte (i) - (vi), wobei die Schritte (i) bis (v) für jede der Pflanzenarten (a) und (b) getrennt durchgeführt werden :
*(i)* Zermahlen der getrockneten Pflanzen, Pflanzenteile oder Samen,
*(ii)* Aufnahme des Mahlgutes in einem polaren, organischen Lösungsmittel,
*(iii)* Durchführung einer Rührextraktion der so erhaltenen Suspension,
*(iv)* Verdampfung des Lösungsmittels, ohne dass eine vorangegangene Trennung der festen Phase von der löslichen Phase durchgeführt wurde,
*(v)* Trocknen des Rückstandes, und
*(vi)* Vermischen der beiden gemäß der Schritte (i) bis (v) für jede Pflanzenart erhaltenen pulverförmigen Produkte im gewünschten Verhältnis.

Gegenstand der Erfindung ist auch eine Zubereitung in Form einer wässrigen Suspension auf Basis der oben genannten pulverförmigen Zubereitung

Gegenstand der Erfindung ist ferner ein Verfahren zur Herstellung einer entsprechenden für den biologischen Pflanzenschutz geeigneten pulvrigen oder wässrigen Zubereitung, welches dadurch gekennzeichnet ist, dass man die folgenden Schritte durchführt, wobei die Schritte (i) bis (v) für jede der Pflanzenarten (a) und (b) getrennt erfolgen:
*(i)* Zermahlen der getrockneten Pflanzen, Pflanzenteile oder Samen,
*(ii)* Aufnahme des Mahlgutes in einem polaren, organischen Lösungsmittel,
*(iii)* Durchführung einer Rührextraktion der so erhaltenen Suspension,
*(iv)* Verdampfung des Lösungsmittels, ohne dass eine vorangegangene Trennung der festen Phase von der löslichen Phase durchgerührt wird,
*(v)* Trocknen des Rückstandes,
*(vi)* Mischen der beiden gemäß der Schritte (i) bis (v) für jede Pflanzenart (a) und (b) erhaltenen pulverförmigen Produkte im gewünschten Verhältnis zu einem Mischpulver und,
   im Falle der Herstellung einer wässrigen Zubereitung,
*(vii)* Suspendieren des erhaltenen Mischpulvers aus (vi) in Wasser in der vorgesehenen Konzentration.

Entscheidend für die Wirksamkeit der erfindungsgemäßen pflanzlichen Zubereitung ist das Verhältnis des Pflanzenmaterials Nelkengewächse zu Luzernarten Der Anteil der Nelkengewächse muß mindestens 80 Gewichtsprozent bezogen auf das Pulvergemisch sein, darf jedoch 99 % nicht überschreiten. Die Wirksamkeit ist zwischen 90 und 98% Nelkengewächs-Anteil deutlich erhöht gegenüber den Gemischen mit einer Zusammensetzung von 80 und 99 %. Ein Gemisch mit etwa 95 % Anteil Nelkengewächse und 5 % Anteil Luzernarten ist erfindungsgemäß besonders bevorzugt, da die Wirksamkeit als biologisches Pflanzenschutzmittel mit resistenzinduzierender Wirkung hier ein relativ schmales aber ausgeprägtes Maximum zeigt. Zubereitungen, welche aus nur einer der beiden genannten Pflanzenkomponenten bestehen, sind überraschenderweise unwirksam, ebenso wie Zubereitungen, die einen Anteil von Nelkengewächse aufweisen, der deutlich unter 80 % liegt. Die sprunghaft gestiegene, überraschend hohe Wirksamkeit der erfindungsgemäßen Zubereitung bei einem Nelkengewächs - Anteil von etwa 95 % läßt vermuten, daß es hier zu einer synergistischen Wirkung der Wirkstoffe aus den Nelkengewächsen und der Luzernarten kommt.

Gegenstand der Erfindung ist somit eine bevorzugte Zubereitung auf Basis von Pflanzen oder Pflanzenteilen der Nelkengewächse und Luzernarten, wobei der Gewichtsanteil des Pulvers, welches aus der Pflanzenfamilie der Nelkengewächse stammt, über 90 bis 98 %, besonders bevorzugt etwa bei 95 % (5 % Luzernarten) liegt.

Nelkengewächse stellen eine eigene Pflanzenfamilie dar. Sie sind, insbesondere in Mitteleuropa weitverbreitet, und haben sich innerhalb gewisser Grenzen den verschiedensten Boden- und Klimabedingungen angepaßt. Nelkengewächse findet man auf sauren wie auf kalkhaltigen Böden, jedoch bevorzugen sie in der Regel nährstoffarme Böden. Beispiele für Nelkengewächse, die sich für die Ausführung der Erfindung eignen, sind Heide-Nelke, Büschel-Nelke, Karthäuser-Nelke, Prachtnelke, Leimkraut, Kuckucks-Lichtnelke, Pechnelke, Nachtnelke, Rote Lichtnelke, Echtes und Rotes Seifenkraut, Steinmiere, Waldstemmiere, Rippen-Nebelmiere. Besonders bevorzugt sind die Kuckucks-Lichtnelke (*Lychnis flos-cuculi*) und die gemeine Pechnelke (*Lychnis viscaria*). Erfindungsgemäß können auch verschieden Arten gemischt werden. Bevorzugt ist aber der Einsatz von jeweils nur einer Art.

Auch die Leguminosen (Schmetterlingsblütengewächse) stellen eine Pflanzenfamilie dar; unter ihnen gibt es zahlreiche Unterfamilien (z.B. Fabaceae), Gattungen und Arten, die als Nutz- bzw. Futterpflanzen weltweit angebaut werden. Ihre Vertreter weisen einen hohen Anteil an Eiweißstoffen und Stärke auf und stellen keine besonderen Ansprüche an den Boden, da die in den Wurzeln symbiotisch lebenden, stickstoffbindenden Bakterien zur Bodenverbesserung beitragen. Als Beispiele für Vertreter von Leguminosen können viele Kleearten, wie Echter Steinklee, Gemeiner Wundklee, Gold-Klee, Feld-Klee, Gemeiner Hornklee, Sumpf-Hornklee, Schopf-Hufeisenklee, genannt werden. Ebenso geeignet sind Luzernarten, Süßholz-Tragant, Gelbe Spargelerbse, Ranken-Blatterbse, Wiesen-Blatterbse. Besonders geeignet sind die Luzernenarten, wie beispielsweise Sichel-Luzerne oder Hopfen-Luzerne.

Zur Bereitstellung der Pflanzen für die Durchführung der Erfindung können diese auch systematisch durch Aussaat angezogen werden. Erfindungsgemäß ist dabei die Verwendung von Wildformen, die nicht durch züchterische Maßnahmen beeinflußt worden sind, bevorzugt.
Gegenstand der Erfindung ist somit eine entsprechende Zubereitung, die dadurch gekennzeichnet ist, daß das eingesetzte Pflanzenmaterial von durch Züchtung nicht beeinflußten Wildformen stammt, welche vorzugsweise ohne Behandlung von mineralischen Düngemitteln und / oder Pestiziden aufwuchsen. Dies bedeutet aber nicht, daß das benötigte Pflanzenmaterial nur aus wild wachsenden Pflanzen gewonnen werden kann. Vielmehr kann es auch unter den genannten Bedingungen durch gezielte Ansaat bereitgestellt werden. Vorzugsweise empfiehlt es sich, für jede Saison einen anderen Standort zur Ansaat auszuwählen, dessen Boden zuvor durch entsprechende Analysen charakterisiert werden kann. Prinzipiell reichen die Maßnahmen, die nach den Richtlinien der Europäischen Gemeinschaft EG 2092/91 für den ökologischen Landbau" aus, um befriedigende Endergebnisse zu erlangen. Die Saatgutmengen, die für ein Hektar benötigt werden, richten sich nach der auszusäenden Spezies sowie der speziellen Bodenzusammensetzung. In der Regel reichen 20 bis 30 kg Saatgut / Hektar aus. Weiterhin vorteilhaft für die Wirksamkeit der erfindungsgemäßen Zubereitung ist eine Vorfrucht-Aussaat, insbesondere von Mais oder Weizen. Generell sollte darauf geachtet werden, daß vor und während der Pflanzperiode der Nelken-/Leguminosengewächse keine zusätzlichen Streßfaktoren, wie z.B. Schädlingsbefall oder Kontamination mit Umweltgiften, geschaffen werden. Wird für die Herstellung der erfindungsgemäßen Zubereitung Saatgut verwendet, können durch Aussiebung des schwachen oder kranken Saatgutes noch bessere Ergebnisse erzielt werden.
Erfindungsgemäße Zubereitungen, die aus solchem Pflanzenmaterial hergestellt wurden, zeigen besonders hohe Wirksamkeit. In manchen Fällen läßt sich eine nennenswerte Pflanzenschutzwirkung nur bei derartig behandelten Ausgangspflanzen beobachten. Offensichtlich sind bei den nach den üblichen Standardmethoden kultivierten, bzw. züchterisch veränderten Formen die ursprünglichen latenten Abwehrkräfte bereits stark verkümmert, so daß sie sich nicht mehr für den erfindungsgemäßen Zweck eignen.

Prinzipiell lassen sich alle Pflanzenteile der Nelken-, bzw. Luzernarten gewächse für die Herstellung der erfindungsgemäßen Zubereitung verwenden, also beispielsweise Stengel, Blätter, Wurzeln, Blüten oder Samen. Vorzugsweise werden jedoch Samen der entsprechenden Arten eingesetzt.

Gegenstand der Erfindung ist somit eine entsprechende Zubereitung, die dadurch gekennzeichnet ist, da die zur Verwendung kommenden Pflanzenteile Samen sind.
Das entsprechend dem erfindungsgemäßen Verfahren zubereitete Pulver aus den beiden genannten Pflanzenfamilien ist problemlos über einen längeren Zeitraum lagerfähig und kann direkt für den Einsatz zur Behandlung gefährdeter oder erkrankter Pflanzen am besten in Form von wäßrigen Suspensionen zur Verfügung gestellt werden. Bei Anwendungen von großen Mengen auf großen Flächen, insbesondere in der Landund Felderwirtschaft ist es vorteilhaft, das Pulver zunächst mit einem Träger oder Füllstoff zu versetzen. Dabei eignen sich alle für derartige Zwecke bekannten Materialien, so beispielsweise Gesteinsmehl, Magnesiumsilikatpulver oder Algenmehle. Erfindungsgemäß werden, je nach zu behandelnder Pflanzenart, 2 bis 8 g Pflanzen-Mischpulver mit 98 bis 92 g des jeweiligen Füllstoffes vermischt .
Gegenstand der Erfindung ist somit eine entsprechende Zubereitung, die zusätzlich Füll- oder Trägerstoffe enthält, wobei vorzugsweise der Gewichtsanteil des von den Pflanzen stammenden Mischpulvers bezogen auf die Füll- /Trägerstoffe 2 bis 8 % betragt. Dieses einsatzfähige Gemisch kann nun wiederum in Wasser aufgenommen und als wäßrige Suspension zur Behandlung eingesetzt werden. Erfindungsgemäß werden 50 bis 400 g, vorzugsweise 100 bis 200 g einer solchen Gesamtmischung (Pflanzenpulver plus Füll-/Trägerstoff) auf einen Hektar eingesetzt. Letztlich hängt die Menge aber von verschieden Faktoren, wie Pflanzenart, Befallsart, Befallsentwicklung, bereits vorliegender Schaden, Bodenbeschaffenheit, etc. ab.
Wie bereits erwähnt, wird die erfindungsgemäße pulverförmige Zubereitung mit oder ohne Füllstoffe vorzugsweise in Wasser aufgenommen, bzw. suspendiert und die erhaltene wäßrige Suspension zum unmittelbaren Einsatz durch Besprühen, Gießen, Imprägnieren oder ähnlichem verwendet. Dabei ist es sowohl für die Wirksamkeit, als auch für die Wirtschaftlichkeit der erfindungsgemäßen Zubereitung von ausschlaggebender Bedeutung, in welcher Konzentration das besagte Pflanzenmischpulver in dieser wäßrigen Lösung vorliegen kann bzw. muß.
Gegenstand der Erfindung ist somit eine entsprechende Zubereitung, die dadurch gekennzeichnet ist, daß sie durch Zusatz von Wasser als wäßrige Suspension vorliegt, wobei die Konzentration des von den Pflanzen stammenden Mischpulvers 0.1 mg bis 2 mg / l, vorzugsweise 0.5 bis 1.0 mg / l, besonders bevorzugt 0.5 bis 0.6 mg / l (nur auf das Pflanzenpulver bezogen) beträgt. In diesem überraschend niedrigen Wert begründet sich ein großer Teil der erfinderischen Leistung der vorliegenden Anmeldung. Weiterhin ist es als überraschend zu bezeichnen, daß höhere Konzentrationen, so z. B. 5 mg / l, meist eine geringere resistenzinduzierende Wirkung zeigen.

Gegenstand der Erfindung ist also auch die Verwendung der besagten Zubereitung als biologisches Pflanzenschutzmittel, insbesondere als Mittel mit resistenzinduzierender Wirkung. Der Begriff der induzierten Resistenz ist erfindungsgemäß entsprechend den in der Einleitung gemachten Angaben definiert. Die erfindungsgemäße Zubereitung zeigt dabei, sofern gemessen, alle entsprechenden Merkmale, welche für die Wirkung der induzierten Resistenz in Frage kommen.
Die Zubereitung ist in den angegebenen Konzentrationen bei einer breiten Palette unterschiedlicher Pflanzen, wie Getreide oder Gemüse aber auch Zierpflanzen. Ziergehölzen oder Pflanzen der Forstwirtschaft hochwirksam und zwar gegen eine Vielzahl von pathogenen Schimmelarten, darunter Echtem Mehltau, sowie gegenüber Bakterien- oder sogar Virenbefall. Es konnte beispielsweise gezeigt werden, daß Tabak nach Behandlung nicht nur vor Befall mit Tabakmosaikvirus (TMV) geschützt werden kann, sondern, daß bei bereits mit TMV befallenen Tabakpflanzen eine starke Abnahme der Blattschäden zu beobachten ist.
Gegenstand der Erfindung ist somit die Verwendung des genannten Zubereitung zur Erzielung und Förderung der induzierten Resistenz bei Nutz- und Kulturpflanzen gegenüber pathogenen Einflüssen und streßbedingten Faktoren, insbesondere bei bakteriellen, fungizden oder viralen Infekten. Erfindungsgemäß werden unter dem Begriff "pathogene Einflüsse und streßbedingte Faktoren" auch alle Belastungen und Schädigungen der Pflanze durch Umweltgifte, Bodenbelastung, Klimastreß, wie Dürre- und Kälteperioden, starke Sonnen- bzw. UV-Bestrahlung, oder auch übermäßige und / oder einseitige Düngung verstanden. Oft sind es gerade solche Faktoren oder Einflüsse, welche die Abwehrkräfte der Pflanze schwächen und so erst einen Pilz-, Bakterienoder Virenbefall ermöglichen.

Neben der Wirkung bzw. Verwendung als biologisches, untoxisches. die resistenzinduzierendes Pflanzenschutzmittel, welches somit nicht den behördlichen Zulassungsauflagen unterliegt, weist die erfindungsgemäße Zubereitung auch noch pflanzenstärkende Wirkungen auf, die sich zum Beispiel in einer erhöhten Chlorophyllproduktion, im kräftigeren Wuchs, verstärktem Wurzelwachstum und ähnlichem bemerkbar machen können. Das Ausmaß dieses Wirkeffektes hängt allerdings stark von der Art der Pflanze und anderen äußeren Faktoren ab. Es ist durchaus möglich, daß in einigen Fällen, die Wirkung der induzierten Resistenz ohne oder ohne einen merklichen Stärkungseffekt begleitet wird. Um den Stärkungseffekt besonders herauszustellen, genügt im Gegensatz zur Resistenzinduktion in der Regel eine einmalige Behandlung nicht.

Die erfindungsgemäße Zubereitung kann unter anderem auf die heranwachsenden Pflanzen aufgebracht, vorzugsweise gesprüht, werden. Zur prophylaktischen Behandlung werden dabei die frisch gekeimten oder die jungen Pflanzen, welche das erste, zweite oder dritte Blatt gerade ausgebildet haben, mit der wäßrigen Suspension behandelt. Bei bereits befallenen Pflanzen erfolgt die Behandlung unmittelbar nach Feststellung der Schädigung. Alternativ kann auch das Saatgut durch Besprühen oder Imprägnierung vor Aussaat behandelt werden. Diese Methode hat sich als besonders wirksam gezeigt, um Befall oder Schädigungen zu verhindern.
Eine weitere erfindungsgemäße Methode ist die vorzugsweise Besprühung oder Begießung der Bodenfläche, auf der das zu schützende Pflanzengut aufwachsen soll. Der keimende Samen kann so die für die Wirkung verantwortlichen Stoffe der erfindungsgemäßen Zubereitung aufnehmen, wodurch die Abwehrkraft der sich entwickelnden Pflanze im erwähnten Sinn gestärkt wird.

Die Behandlung des Bodens mit der erfindungsgemäßen Zubereitung hat aber auch noch einen weiteren positiven und erfinderischen Effekt. Es konnte nämlich gezeigt werden, daß die erfindungsgemäße Zubereitung die im Boden befindlichen und für ein gesundes Wachstum der in ihm wachsenden Pflanzen verantwortlichen mikrobiellen Bodenkulturen überraschenderweise stärkt bzw. regeneriert. Die Anwendung der erfindungsgemäßen Zubereitung kann somit auch auf die Sanierung von belasteten, bzw. Verbesserung verbrauchter Böden ausgedehnt werden. Die erfindungsgemäße Zubereitung wird dabei in den Boden eingebracht, wobei durch ein- oder mehrmalige Umschichtung des Bodens eine bessere Verteilung des Materials bis in eine bestimmte gewünschte Tiefe bei gleichzeitiger Belüftung des Bodens erreicht wird. Die Aktivität der nützlichen Bodenkulturen kann dabei nach Standardmethoden während des Sanierungsvorganges verfolgt werden. Durch Kombination von Bodenbehandlung und Pflanzen- bzw. Samenbehandlung können somit besonders vorteilhafte Ergebnisse erzielt werden. Die überraschende zusätzliche positive Wirkung auf Mikroorganismen befähigt die erfindungsgemäße Zubereitung auch zum Einsatz als Kompostierungsmittel, bzw. Kompostierungsbeschleuniger. Hierbei können, wie gezeigt wurde, insbesondere auch schädigende Fäulnisbakterien stark zurückgedrängt werden. In diesem Sinne läßt sich die erfindungsgemäße Zubereitung auch zur längeren Aufbewahrung und Konservierung von beispielsweise Schnittpflanzen, insbesondere Schnittblumen, erfolgreich einsetzen.
Gegenstand der Erfindung ist somit auch die Verwendung der erfindungsgemäßen Zubereitung zur Stärkung und Regenerierung von insbesondere in Böden vorkommenden nützlichen Mikroorganismen.
Die erfindungsgemäßen Zubereitungen umfassen auch solche Zubereitungen auf Basis von Pflanzen oder Pflanzenteilen aus den Familien der Nelkengewächse und der Leguminosen, welche zusätzlich weitere Bestandteile enthalten können. Solche Bestandteile können im Prinzip Düngemittelzusätze, insbesondere auf organischer Basis, Bodenverbesserungszusätze, inklusive nützliche Mikroorganismen, oder Zusätze, welche die Wirkung der erfindungsgemäßen Zubereitung zu verstärken oder zu regulieren vermögen.

Verstärkende Zusätze im Sinne der Erfindung können herkömmliche Pflanzenschutzmittel sein, falls der Befall, bzw. die Schädigung der betreffenden Pflanzen bereits so intensiv ist, daß mit derartigen Zusätzen, die erfindungsgemäße Wirkung zumindest temporär unterstützt werden muß, um die Pflanzen noch zu retten. In solchen Fällen ist die benötigte Menge an herkömmlichen Pflanzenschutzmitteln generell wesentlich geringer als ohne Einsatz der erfindungsgemäßen Zubereitung, so daß die Belastung der Umwelt mit derartigen Zusätzen unter Verwendung der erfindungsgemäßen Zubereitung deutlich geringer ausfällt.

Regulierende Zusätze im Sinne der Erfindung sind vorzugsweise pflanzliche Zubereitungen, welche insbesondere die pflanzenstärkenden Effekte der erfindungsgemäßen Zubereitung in Fällen, in denen es gewünscht ist, zu regulieren vermögen. Da durch Applikation der erfindungsgemäßen Zubereitung sehr häufig bestimmte Inhaltsstoffe in den behandelten Pflanzen vermehrt gebildet werden, kann es erwünscht sein, diesen Effekt wieder herunterzufahren bzw. sogar unter das normale Maß zu senken. Beispiele hierfür sind der Nikotingehalt von Tabakpflanzen oder der Proteingehalt von für bestimmte Anwendungen benötigte Getreide (z.B. Braugerste). Ein Beispiel für einen solchen regulierenden Zusatz sind entsprechend dem erfindungsgemäßen Verfahren gewonnene Pulver aus Senfpflanzen oder Wildkirschen. Der Anteil solcher regulierender Zusätze an der Gesamtmischung kann erfindungsgemäß zwischen 0.5 und 10% liegen.
Die Zusätze werden vorteilhafterweise in pulverisierter Form zu dem erfindungsgemäßen Pflanzenpulver gegeben und mit diesem vermischt.
Die erfindungsgemäße Zubereitung weist, zusammengefaßt, die folgenden wichtigsten Vorteile auf:
Sie bewirkt bei den behandelten verschiedenartigsten Pflanzen induzierte Resistenz. Sie ist sowohl bei nicht - befallenen (als Prophylaxe) als auch bei befallenen Pflanzen zu beobachten. Der Wirkungsgrad der befallenen Pflanzen liegt im Durchschnitt zwischen 30 und 75%, vorzugsweise zwischen 50 und 70%, d.h. daß beispielsweise die Blattschäden nach erfolgter einmaliger Behandlung nur noch 25 bis 70 % (30 bis 50%) des ursprünglichen Befalls betragen. In bestimmten Fällen können auch Wirkungsgrade über 90% erreicht werden. Prophylaktisch behandeltes Pflanzen- oder Bodenmaterial weist in den meisten Fällen kein oder nur einen geringfügigen Befall auf, wenn die Pflanzen dem Pathogen nach Behandlung mit der erfindungsgemäßen Zubereitung ausgesetzt wird. Mittels der erfindungsgemäßen Zubereitung können Pilzerkrankungen wie Mehltau, Echtem Mehltau, Blauschimmel und Grauschimmel bei zahlreichen Kulturpflanzen, wie Tomaten, Gurken, Weizen, usw. erfolgreich behandelt werden.
Besonders hervorzuheben ist die Wirksamkeit der Zubereitung gegenüber Tabakmosaikvirus bei Tabakpflanzen. Dies ist der erste Fall, daß ein auf Pflanzen basierendes biologisches Mittel gegenüber Virenbefall bei Pflanzen im hohen Maß wirksam ist.
Die erfindungsgemäße Zubereitung wirkt nicht toxisch gegenüber dem die Pflanzenkrankheit auslösenden Pathogen, z.B. dem Bakterium, dem Pilz oder dem Virus und erfüllt somit eine wichtige Voraussetzung für das Vorhandensein von induzierter Resistenz. Es konnte nämlich gezeigt werden, daß die erfindungsgemäße Zubereitung das Myzelwachstum von Pilzen konzentrationsunabhängig in keinerlei Weise beeinträchtigt, also nicht fungizid wirkt, und somit im Gegensatz zu den klassischen Pflanzenschutzmitteln steht.
Weiterhin konnte gezeigt werden, daß wichtige für die Resistenzinduktion verantwortliche PR-Proteine, wie unter anderem Chitinase und β-1,3-Glucanase bei Applikation der erfindungsgemäßen Zubereitung auf Pflanzen deutlich verstärkt (30 bis 50%ige Steigerung) gebildet werden.
Besonders bemerkenswert ist auch die erfindungsgemäße minimale Wirkkonzentration, welche ein relativ schmales Maximum zwischen 0.5 mg und 1 mg / l aufweist.
Pflanzenschützende Naturextrakte, die in vergleichbar geringen Konzentrationen wirken, sind bislang nicht bekannt.
Die erfindungsgemäße Zubereitung bewirkt, daß die behandelte Pflanze gesund wird oder bleibt. Gleichzeitig werden auch pflanzenstärkende Effekte wirksam. Zusammengenommen können in vielen Fällen dadurch Ertragssteigerungen von 20 bis 50%, sogar im Feldmaßstab (in Abhängigkeit von den anderen speziellen Bedingungen) erzielt werden. Diese Steigerungen können sogar im Vergleich zu gesunden Kontrollpflanzen (ohne Behandlung mit der erfindungsgemäßen Zubereitung) erreicht werden. Dies bedeutet, daß der Einsatz der erfindungsgemäßen Zubereitung beispielsweise mittels prophylaktischer Boden- und /oder Samen-/ Pflanzenbehandlung zur Ertragssteigerung von gesunden und abwehrstarken Pflanzen führt.

Die erfindungsgemäße Zubereitung kann, wie folgt hergestellt werden, wobei naheliegende Varianten und Abänderungen, sofern nichts anderes hierüber gesagt wird, eingeschlossen sind. Die Behandlung bzw. Aufzucht der Pflanzen wurde bereits weiter oben beschrieben.
Es soll hier nochmals betont werden, daß für jeden Vertreter der beiden erfindungsgemäßen Pflanzenfamilien (Nelkengewächse, Leguminosen) vorzugsweise ein eigener Aufarbeitungsweg bis zu der entsprechenden Vermischung erfolgen sollte, um die volle erfindungsgemäße Wirkung zu erzielen.
Geht man von Pflanzen bzw. Pflanzenteilen aus so werden diese zunächst nach üblichen Methoden schonend getrocknet. Temperaturen von über 40° C sollten hierfür, aber auch für alle weiteren Verfahrensschritte, gemieden werden. Das getrocknete Pflanzenmaterial, wobei Samen mit eingeschlossen sind, wird in einer handelsüblichen Mühle fein gemahlen. Die Korngröße sollte 0.05 mm nicht unterschreiten und 0.5 mm nicht überschreiten, um optimale Extraktionseffekte zu erzielen. Vorzugsweise weist das gemahlene Material eine durchschnittliche Korngröße von 0.1 bis 0.2 mm auf.
Das gemahlene Material wird nun mit einem organischen, polaren Lösungsmittel versetzt und die erhaltene Suspension intensiv bei vorzugsweise Raumtemperatur gerührt. Temperaturen von deutlich unter 15° C sind zumeist mit einem Wirkungsverlust verbunden und sollten daher vermieden werden. Als polares organisches Lösungsmittel eigenen sich insbesondere niedere Alkohole wie z.B. Ethanol, n-Propanol, isoPropanol oder n-Butanol. Auch Gemische verschiedener Alkohole sind möglich. Besonders bevorzugt ist Ethanol. Methanol ist nur bedingt einsetzbar. Für alle verwendeten Lösungsmittel gilt, daß sie hochrein sein sollten, also z. B. keine Vergällungsstoffe oder andere Unreinheiten enthalten. Das Lösungsmittel kann 0 bis 30 % Wasser enthalten. Ein hoher Anteil von Wasser erschwert allerdings sehr häufig das spätere notwendige Entfernen des Lösungsmittels. Erfindungsgemäß werden ein bis vier Volumenteile Lösungsmittel, vorzugsweise 1.5 bis zwei Volumenteile Lösungsmittel, auf ein Volumenteil gemahlenes Pflanzenmaterial eingesetzt.
Es erfolgt eine Rührextraktion über drei bis sechs, vorzugsweise vier bis fünf Tage bei vorzugsweise Raumtemperatur. Gegebenenfalls wird etwas Lösungsmittel dem Ansatz hinzugefügt, um Verdunstungseffekte auszugleichen. Anschließend wird das Lösungsmittel vorsichtig entfernt, am günstigsten mittels eines Rotationsverdampfers unter leichtem Vakuum, wobei Temperaturen von 40°C nicht überschritten werden sollten. Auch einfaches Verdunstenlassen zwischen 30 und 40°C ist geeignet. Erfindungswesentlich ist also, daß die während der Extraktion in Lösung gegangenen Stoffe nicht abgetrennt, sondern vielmehr wieder dem festen, "angelösten" Rückstand zugeführt werden. Der so erhaltene, ggf. noch feuchte Rückstand wird mit einem handelsüblichen Trockenaggregat getrocknet, wobei ein Feuchtigkeitsgehalt von weniger als 10% angestrebt werden sollte. Man erhält somit ein rückstands- und lösungsmittelfreies, pulvriges Produkt, welches entsprechender Gefahrstoff-Verordnungen als gesundheitlich unbedenklich eingestuft werden kann.

Die erhaltenen Pulver, welche aus Pflanzen der Nelkengewächse und der Luzernarten stammt, werden dann, entsprechend der oben und in den Ansprüchen angegebenen Anteile ggf. unter Hinzufügung der genannten Füll-/Trägerstoffe vermischt, und unmittelbar vor Einsatz in Wasser gelöst bzw. suspendiert, wobei die angegebenen Konzentrationen eingestellt werden.

Bei der Untersuchung der erfindungsgemäßen Zubereitungen auf wirkstoffhaltige Substanzen wurde gefunden, daß neben einer Reihe von Phytosterolen auch mindestens drei Brassinosteroid-Verbindungen vorliegen, wobei eine Verbindung noch nicht identifiziert werden konnte, eine als 24-epi-castasteron (*(22R,23R,24R)-2,3,22,23-tetrahydroxy-24-methyl-5α-cholestan-6-on)*,die andere 24-epi-secasteron *((22R, 23R,24R)-22,23-dihydroxy-2β,3β-epoxy-24-methyl-5α-cholestan-6-on)* ist. Letzteres war bislang als Naturstoff noch nicht bekannt. Die Erfindung betrifft also somit auch die Verwendung von 24-epi-secasteron und 24-epi-castasteron als resistenzförderndes Mittel für Pflanzen. Ob diese Verbindungen für die resistenzfördernde Wirkung alleine verantwortlich sind, oder auch noch andere Substanzen hierbei beteiligt sind, oder ob synergistische Effekte verschiedener Komponenten der erfindungsgemäßen Zusammensetzung eine Rolle spielen, ist am Anmeldetag noch nicht bekannt gewesen. Brassinosteroide gehören zu den Phytohormonen und sind als Pflanzenwachstumsregulatoren mit wachstumsfördernder Aktivität bekannt Sie treten im allgemeinen in Mengen von ng - µg/ kg Pflanzenmaterial auf (z. B. Clouse und Sasse, 1998, Rev.

Plant Physiol. Plant Mol. Biol. 49, 427). 24-epi-castasteron kann z.B. aus der Grünalge *Hydrodicton reticulatum* (Yokata et al., 1987, Phytochemistry, 26, 503) oder aus *Beta vulgaris* (Schmidt, J. et al., 1994, Phytochemistry 36, 175) isoliert werden. 24-epi-Secasteron war bislang nur als synthetisches Produkt bekannt (Voigt et al., 1995, J. Chem. Soc. Perkin Trans 1, 1495).
Weiterhin wurden in der erfindungsgemäßen Zusammensetzung eine Reihe von Phytosterolen identifiziert, wie Spinasterol, Colesterol, Campesterol, Campestanol, Stigmasterol, Stigmast-22-en-3β-ol, 24-methylcholest-7-en-3β-ol, Spinasterol, Sitosterol, Sitostanol, Dihydrospinasterol, 24-methylcholesta-5,22-dien-3β-ol, und 24-methyl-cholesta-7,22-dien-3β-ol. Der Hauptanteil dieser Fraktion wird von Spinasterol (85 - 90%) getragen.

Die folgenden Beispiele sollen die Erfindung weiter verdeutlichen, ohne sie einzuschränken:

### Beispiel 1:

1.2 g Samen der Kuckucks-Lichtnelke werden in einer Gewürzmühle fein gemahlen (durchschnittliche Teilchengröße 0.12 mm). Das Pulver wird getrocknet, so daß es einen Feuchtigkeitsgehalt von 7 bis 8% aufweist. Das Pulver wird in 20 - 30 ml reinem Ethanol (99%) aufgenommen und mittels eines elektrischen Laborrührers ca. 100 h bei 20 bis 25°C gerührt. Falls die Mischung zu sehr eindickt, wird entsprechen Ethanol zugegeben. Nach erfolgter Extraktion wird das Lösungsmittel bei Raumtemperatur am Rotationsverdampfer vorsichtig abgezogen. Der Rückstand wird ggf. weiter getrocknet, bis ein feines Pulver vorliegt.

### Beispiel 2:

Analog Beispiel 1 werden Samen der Sichel-Luzerne (1.2 g) gemahlen und der Rührextraktion unterworfen. Man erhält ebenfalls ein getrocknetes Pulver.

### Beispiel 3:

950 mg des Pulvers, hergestellt nach Beispiel 1, und 50 mg des Pulvers, hergestellt nach Beispiel 2, werden innig miteinander vermischt. 50 mg dieses Gemisches werden in 100 1 Wasser gegeben und gut vermengt. Die Lösung kann direkt zum Besprühen von ca. 100 m² Feldfläche eingesetzt werden.

### Beispiel 4:

Man stellt, wie beschrieben, 6 g eines Gemisches, gewonnen aus Lichtnelkenblättern und Luzernenblättern, her (5.7 g Nelkenpulver, 0.3 g Luzernenpulver). Diese Menge wird zu 96 g Geteinsmehl gegeben, bzw. mit diesem innig vermischt. Zu diesem Gemisch werden in einem ca. 15.000 l fassenden Rührtank 10.000 1 Wasser gegeben. Die Menge reicht aus, um einen Hektar Ackerfläche zu behandeln.

### Beispiel 5:

Im Gewächshaus werden Tabakpflanzen der hypersensitiv reagierenden Sorte "Xanthi NN" kultiviert. Ein Teil der Pflanzen wird mit Wasser, welchem 0.125 % Tween 20 als Netzmittel zugesetzt sind, besprüht. Diese Pflanzen stellen die Kontrolle dar. Der andere Teil der Pflanzen wird mit einer Lösung, welche 1 mg / 1 Pflanzenmehl (95/5 Mischung aus Nelken/Luzernen) und ebenfalls Tween 20 als Netzmittel (0.125%) enthält besprüht.
Nach 5 Tagen der Inkubation werden die Pflanzen mit Tabakmosaikvirus inokuliert. Hierzu wurde zuvor TMV befallenes Pflanzenmaterial in 0.1 M Natriumphosphat-Puffer (pH = 6.8) gemörsert und mit wenig Carborundum als Reibmittel versetzt. Diese Suspension wird anschließend mit einem Pinsel auf das zweite und dritte Laubblatt (von unten gezählt) der behandelten als auch der Kontrollpflanzen aufgerieben.
Nach 6 Wochen wurde das Schadbild bzw. der Befall bewertet (% der Blattfläche, Läsionsdurchmesser in mm).

.

**Tab. 1**

| *Wirkung der erfindungsgemäßen Zubereitungen unterschiedlicher Konzentrationen auf mit TMV befallenen Blättern von Tabakpflanzen. Angegeben sind die Blattschäden in % bezogen auf die Kontrolle (unbehandelte Pflanzen = 100%)* | | | | |
|---|---|---|---|---|
| **Konz. Zubereitung / Tabakblätter** | **0 mg / l (Kontrolle)** | **0.5 mg / l** | **1.0 mg / l** | **2.0 mg / l** |
| 2. Blatt | 100% | 80 % | 50 - 60% | 63 - 80% |
| 3. Blatt | 100% | n.b | 35 - 62% | 65 - 75% |

### Beispiel 6:

Analog Beispiel 5 werden Weizenpflanzen nach Behandlung mit der erfindungsgemäßen Zubereitung (Kontrollpflanzen: nur mit Wasser) mit Echtem Mehltau infiziert und die Blattschäden bestimmt. Die Ergebnisse sind der Tab. 2 zu entnehmen.

**Tab. 2:**

| *Wirkung der erfindungsgemäßen Zubereitungen unterschiedlicher Konzentrationen auf mit Echtem Mehltau befallenen Weizenpflanzen. Angegeben sind die Blattschäden in % bezogen auf die Kontrolle (unbehandelte Pflanzen = 100%)*. | | | | | |
|---|---|---|---|---|---|
| **Konz. Zubereitung / Weizen** | **0 mg / l (Kontrolle)** | **0.25 mg / l** | **0.5 mg / l** | **1.0 mg / l** | **2.0 mg / l** |
| 2. Blatt | 100% | 70 - 90% | 65 - 75 % | 85 - 95 % | 74- 87% |
| 3. Blatt | 100% | 78 - 85% | 70 - 80 % | 80 - 90 % | 75 - 85% |

### Beispiel 7:

Analog Beispiel 5 werden Gurken nach Behandlung mit der erfindungsgemäßen Zubereitung (Kontrollpflanzen: nur mit Wasser) mit Echtem Mehltau infiziert und die Blattschäden bestimmt. Die Ergebnisse sind der Tab. 3 zu entnehmen.

**Tab. 3:**

| *Wirkung der erfindungsgemäßen Zubereitungen unterschiedlicher Konzentrationen auf mit Echtem Mehltau befallenen Gurkenpflanzen. Angegeben sind die Blattschäden in % bezogen auf die Kontrolle (unbehandelte Pflanzen = 100%)*. | | | | |
|---|---|---|---|---|
| **Konz. Zubereitung / Gurken** | **0 mg / l (Kontrolle)** | **0.5 mg / l** | **1.0 mg / l** | **2.0 mg / l** |
| 2. Blatt | 100% | 70 - 85 % | 85 - 95 % | 40 - 70% |
| 3. Blatt | 100% | 60 - 65 % | 82 - 90 % | 35 - 75% |

### Beispiel 8:

Analog Beispiel 5 werden Tomatenpflanzen nach Behandlung mit der erfindungsgemäßen Zubereitung (Kontrollpflanzen: nur mit Wasser) mit Grauschimmel (*Botrytis cinerea*) infiziert und die Blattschäden bestimmt.
Eine Behandlung mit der erfindungsgemäßen Zubereitung in einer Konzentration von 0.6 mg / 1 bewirkt eine Verminderung der Blattschäden im Vergleich zur unbehandelten aber ebenfalls mit Grauschimmel infizierten Kontrolle um 55 - 65 %. Eine Behandlung mit einer zehnfach konzentrierteren Lösung der erfindungsgemäßen Zubereitung bewirkt eine Abnahme der Schäden lediglich zwischen 48 und 56%.

### Beispiel 9:

Entsprechend Beispiel 5 werden Weizen, Tomaten, Gurken- und Bohnenpflanzen im Gewächshaus aufgezogen und mit der erfinderischen Zubereitung, wie beschrieben, behandelt. Ein Teil der Pflanzen wird als Kontrolle eingesetzt. Eine Infektion mit Krankheitserregern erfolgt bei diesen Versuchen nicht. Nach sechs Wochen werden verschieden Parameter wie Frischgewicht, Blattfläche, Sproßlänge und Chlorophyllgehalt nach gängigen Standardmethoden bestimmt und mit denen der Kontrollpflanze verglichen.
Bis auf eine Ausnahme konnte in allen Fällen kann eine Steigerung der genannten Parameter beobachtet werden:
*Frischgewicht:* Steigerung um 21(Weizen) bis 57% (Tomate);
*Sproßlänge:* Steigerung um 15(Bohne) bis 34% (Tomate);
*Chlorophyllgehalt:* Steigerung um 8 (Weizen) und 76% (Gurke), bzw. 90% (Bohne), lediglich bei Tomaten konnte keine signifikante Steigerung des Chlorophylgehaltes festgestellt werden.

### Beispiel 10:

10 Liter einer Lösung der erfindungsgemäßen Zubereitung in einer Konzentration von 0.6 mg / l werden auf einen Kulturboden (Fläche: ca. 10 m² ) im Gewächshaus oberflächlich versprüht. Auf diesen Boden werden Weizen, Tomaten und Bohnenpflanzen angepflanzt. Ein Teil der Pflanzen wird als Kontrolle auf unbehandeltem Boden aber unter sonst gleichen Bedingungen aufgezogen. Nach sechs Wochen werden verschieden Parameter wie Frischgewicht, Blatttläche, Sproßlänge und Chlorophyllgehalt bestimmt und mit denen der Kontrollpflanze verglichen.
Während bei Weizen und Tomate unter diesen Bedingungen keine signifikante Steigerung der genannten Parameter zu beobachten waren, erhöhte sich bei Bohnenpflanzen das Frischgewicht um durchschnittlich 21%, die Blattfläche um 18%, die Sproßlänge um 25% und der Chlorophyllgehalt um 5% gegenüber den jeweiligen Kontrollpflanzen.

### Beispiel 11:

Es wird das Myzelwachstum des Erregers der Kraut- und Knollenfäule der Kartoffel, *Phytophtora infestans,* in Anwesenheit verschiedener Konzentrationen der erfindungsgemäßen Zubereitung auf V8-Agar gemessen. Es konnte gezeigt werden, daß das Myzelwachstum im gesamten gemessenen Konzentrationsbereich zwischen 0.5 und 1000 mg / l der erfindungsgemäßen Zubereitung nicht signifikant beeinflußt wird. Dies bedeutet, daß das erfindungsgemäße Mittel keine toxische Wirkung auf den Pilz ausübt Die erfindungsgemäße Wirkung ist somit nicht durch einen fungiziden Einfluß zu erklären, wie dies bei herkömmlichen Pflanzenschutzmitteln der Fall ist.

### Beispiel 12:

### Aufreinigung und Identifizierung von Brassinosteroiden:

Nach Beispiel 1 hergestelltes Pulver (25g) wurde dreimal mit 200 ml Methanol innerhalb einer Woche und anschließend dreimal mit 200 ml eines Gemisches aus Methanol / Essigsäureethylester (1:1 v/v) ebenfalls eine Woche lang extrahiert. Die vereinten Extrakte wurden im Vakuum konzentriert. Der Rückstand wurde mit Wasser / Essigsäureethylester (1:1 v/v) ausgeschüttelt. Die vereinigten Essigsäureethylester-Phasen wurden im Vakuum konzentriert und der Rückstand dreimal mit einem Methanol (90%ig) / n-Hexan - Gemisch ausgeschüttelt. Die vereinigten wäßrigen Methanol-Phasen wurden konzentriert und mit einem Gemisch aus Essigsäureethylester / gesättigte Natriumhydrogencarbonatlösung (1:1 v/v) ausgeschüttelt. Der Rückstand der Essigsäureethylester-Phasen wurde auf einer Kieselgelsäule (20cm x 1 cm, 35-70 mesh Kieselgel, Merck, Germany) chromatographiert. Die Säule wurde sukzessive mit Chloroform (50 ml) und dann mit Methanol in Chloroform (2, 5, 10, 15, 20, 100 v/v %, jeweils 50 ml) eluiert. Das Eluat wurde in 25 ml Fraktionen gesammelt. Die biologische Aktivität wurde mit dem Reis-Lamina-Inklinationstest gemessen. Dieser Test wurde speziell für die Phytohormongruppe der Brassinosteroide entwickelt (Arima et al., 1984, Phytochemistry 23, 1587). Die Fraktion mit biologischer Aktivität (Fraktion 5) wurde mittels präparativer HPLC-Chromatographie weiter gereinigt (4,6 x 250 mm Ultrasphere ODS RP-18 Säule). Die mobile Phase bestand aus A (Wasser, 0,1% TFA v/v) und B (Methanol) mit einer Flußrate von 1ml / min. Das Gradientenprofil war: 0-1 min: 100% A, 1-10 min: 0-40% B (linear), 10-15 min: 40 B, 15-27 min: 40 -100% B (linear), 27-35 min: 100% B, 35-37 min: 0-100% A (linear). Die aktiven Fraktionen hatten eine Retentionszeit von 25,5-29,5 min und wurden zwecks GC-MS-Analyse konzentriert und derivatisiert. Folgende Bedingungen wurden verwendet: EI (70 eV), 200°C Quellentemperatur, Säule: DB-5MS (J&W, 15m x 0,32 mm, 0,25 µm Filmdikke), Einspritztemperatur: 260°C, Interface-Temperatur: 300 °C, Trägergas: Helium, Flußrate: 1 ml / min; Säulen-Temperaturprogramm: 170 °C für 1 min, aufheizen auf 290 °C mit 30 °C / min, 20 min bei 290°C. Die Derivatisierung erfolgte nach Standardmethoden. Zur Identifizierung von 24-epi-castasteron und 24-epi-secasteron wurden auch authentische Proben auf dem GC-MS-System untersucht.

### Reinigung und Identifizierung von Phytosterolen :

Die oben erhaltene n-Hexan-Fraktion wurde konzentriert, in zwei Portionen aufgeteilt, und auf zwei identischen Kieselgel-Säulen (20 cm x 1cm, 35-70 mesh, Merck) chromatographiert. Die Säulen wurden stufenweise mit n-Hexan (50 ml) und dann mit Essigsäureethylester in n-Hexan (10, 30, 50, 70, 90 v/v %, jeweils 50 ml) eluiert. Das Eluat wurde in 6 ml-Fraktionen gesammelt und mittels DC (Laufmittel: Chloroform/Methanol, 95:5 v/v) aufgetrennt. Die Phytosterole wurden durch Ansprühen mit 5 % Schwefelsäure in Essigsäureanhydrid und Erhitzen der DC-Platten auf 150° C sichtbar gemacht. Die Fraktionen, die Phytosterole enthielten, wurden weiter mittels Kieselgelsäulen gereinigt, wobei als Elutionsmittel Dichlormetan / Heptan (1:1 v/v) eingesetzt wurde. Die sterolhaltige Fraktion wurde acetyliert und durch GC-MS nach Standardmethoden analysiert.

## Patentansprüche

1. Zubereitung auf Basis von Pflanzen, Pflanzenteilen oder Samen aus (a) der Familie der Nelkengewächse, ausgewählt aus der Gruppe der Arten Pechnelke *(Viscaria vulgaris,* Kuckuckslichtnelke (*Lychnis flos-cuculi*), Rote Lichtnelke, Nachtnelke, Prachtnelke, Karthäusemelke oder Leimkraut und (b) Luzernarten, in Form eines pulverförmigen Gemisches, wobei der Gewichtsanteil des Pulvers, welches aus den Nelkenarten stammt, über 80 % aber unter 99% liegt, erhältlich durch folgende Schritte (i) - (vi), wobei die Schritte (i) bis (v) für jede der Pflanzenarten (a) und (b) getrennt durchgeführt werden :
*(i)* Zermahlen der getrockneten Pflanzen, Pflanzenteile oder Samen,
*(ii)* Aufnahme des Mahlgutes in einem polaren, organischen Lösungsmittel,
*(iii)* Durchführung einer Rührextraktion der so erhaltenen Suspension,
*(iv)* Verdampfung des Lösungsmittels, ohne dass eine vorangegangene Trennung der festen Phase von der löslichen Phase durchgeführt wurde,
*(v)* Trocknen des Rückstandes, und
*(vi)* Vermischen der beiden gemäß der Schritte (i) bis (v) für jede Pflanzenart erhaltenen pulverförmigen Produkte im gewünschten Verhältnis.

2. Zubereitung nach Anspruch 2, **dadurch gekennzeichnet, dass** der Gewichtsanteil des Pulvers, welches aus den Nelkenarten stammt, 90 - 98 % beträgt.

3. Zubereitung nach Anspruch 3, **dadurch gekennzeichnet, dass** das Gewichtsverhältnis Pulver aus den Nelkenarten zu Pulver aus den Luzernarten 95 zu 5 beträgt.

4. Zubereitung nach einem oder mehreren der Ansprüche 1 bis 3, **dadurch gekennzeichnet, dass** das eingesetzte Pflanzenmaterial von durch Züchtung nicht beeinflussten Wildformen stammt, welche vorzugsweise ohne Behandlung von mineralischen Düngemitteln und / oder Pestiziden aufwuchsen.

5. Zubereitung nach einem oder mehreren der Ansprüche 1 bis 4, **dadurch gekennzeichnet, dass** die Samen der entsprechenden Pflanzen verwendet werden.

6. Zubereitung nach einem oder mehreren der Ansprüche 1 bis 5, **dadurch gekennzeichnet, dass** sie Verbindungen aus der Gruppe der Brassinosteroide enthält.

7. Zubereitung nach Anspruch 6, **dadurch gekennzeichnet, dass** sie 24-epi-secasteron und/oder 24-epi-castasteron enthält.

8. Zubereitung nach einem oder mehreren der Ansprüche 1 bis 7, **dadurch gekennzeichnet, dass** sie zusätzlich feste, pulverförmige Träger- bzw. Füllstoffe enthält.

9. Zubereitung nach Anspruch 8, **dadurch gekennzeichnet, dass** der Gewichtsanteil des von den Pflanzen stammenden Mischpulvers bezogen auf den Füll- /Trägerstoff 2 bis 8 % beträgt.

10. Zubereitung nach einem oder mehreren der Ansprüche 1 bis 10, **dadurch gekennzeichnet, dass** sie zusätzlich die Wirkung verstärkende oder regulierende Zusätze enthält.

11. Zubereitung nach einem oder mehreren der Ansprüche 1 bis 10, erhältlich nach einem Verfahrensschritt gemäß einem oder mehreren der Ansprüche 15 bis 24.

12. Zubereitung in Form einer wässrigen Suspension auf Basis der pulverförmigen Zubereitung gemäß der Ansprüche 1 bis 11.

13. Zubereitung nach Anspruch 12, wobei die Konzentration des von den Pflanzen stammenden Mischpulvers 0.1 mg bis 2 mg / 1 beträgt.

14. Zubereitung nach Anspruch 13, wobei die Konzentration des von den Pflanzen stammenden Mischpulvers 0.5 mg bis 1.0 mg / 1 beträgt.

15. Verfahren zur Herstellung einer für den biologischen Pflanzenschutz geeigneten pulvrigen oder wässrigen Zubereitung gemäß der Ansprüche 1 bis 14, **dadurch gekennzeichnet, dass** man die folgenden Schritte durchführt, wobei die Schritte (i) bis (v) für jede der Pflanzenarten (a) und (b) getrennt erfolgen:
*(i)* Zermahlen der getrockneten Pflanzen, Pflanzenteile oder Samen,
*(ii)* Aufnahme des Mahlgutes in einem polaren, organischen Lösungsmittel,
*(iii)* Durchführung einer Rührextraktion der so erhaltenen Suspension,
*(iv)* Verdampfung des Lösungsmittels, ohne dass eine vorangegangene Trennung der festen Phase von der löslichen Phase durchgeführt wird,
*(v)* Trocknen des Rückstandes,
*(vi)* Mischen der beiden gemäß der Schritte (i) bis (v) für jede Pflanzenart (a) und (b) erhaltenen pulverförmigen Produkte im gewünschten Verhältnis zu einem Mischpulver und,
im Falle der Herstellung einer wässrigen Zubereitung der Ansprüche 12 bis 14,
(vii) Suspendieren des erhaltenen Mischpulvers aus (vi) in Wasser in der vorgesehenen Konzentration.

16. Verfahren nach Anspruch 15, **dadurch gekennzeichnet, dass** man gemahlenes Pflanzenmaterial mit einer durchschnittlichen Korngröße zwischen 0.1 und 0.2 mm zur weiteren Verarbeitung einsetzt.

17. Verfahren nach Anspruch 15 oder 16, **dadurch gekennzeichnet, dass** für die Rührextraktion 1.5 bis 2 Volumenteile Lösungsmittel auf 1 Volumenteil gemahlenes Pulver eingesetzt werden.

18. Verfahren nach einem oder mehreren der Ansprüche 15 bis 17, **dadurch gekennzeichnet, dass** als Lösungsmittel unvergälltes 98 - 100% iges Ethanol eingesetzt wird.

19. Verfahren nach einem oder mehreren der Ansprüche 15 bis 18, **dadurch gekennzeichnet, dass** die Rührextraktion während einer Dauer von etwa 96 bis 120 Stunden durchgeführt wird.

20. Verfahren nach einem oder mehreren der Ansprüche 15 bis 19, **dadurch gekennzeichnet, dass** jeder der Verfahrensschritte bei einer Temperatur zwischen 15 und 40° C durchgeführt wird.

21. Verfahren nach einem oder mehreren der Ansprüche 15 bis 20, **dadurch gekennzeichnet, dass** man getrocknetes Pulver mit einem Wassergehalt kleiner als 10 % zur weitern Verarbeitung gemäß Schritt (vi) einsetzt.

22. Verfahren nach einem oder mehreren der Ansprüche 15 bis 21, **dadurch gekennzeichnet, dass** in dem erhaltenen Mischpulver das Gewichtsverhältnis Pulver aus Nelkenarten zu Pulver aus Luzernenarten 95 zu 5 beträgt.

23. Verfahren nach einem oder mehreren der Ansprüche 15 bis 22, **dadurch gekennzeichnet, dass** das Pflanzenmaterial als eingesetzt wird, welches von durch Züchtung nicht beeinflussten Wildformen stammt und vorzugsweise ohne Behandlung mit mineralischen Düngemitteln und / oder Pestiziden aufwuchs.

24. Verfahren nach einem oder mehreren der Ansprüche 15 bis 23, **dadurch gekennzeichnet, dass** das gemäß Schritt (vi) erhaltene Mischpulver zusätzlich mit einem festen, pulverförmigen Träger- oder Füllstoff vermengt wird.

25. Verwendung einer Zubereitung gemäß einem oder mehrere der Ansprüche 1 bis 14 als biologisches Pflanzenschutzmittel.

## Claims

1. Preparation based on plants, plant parts or seeds from (a) the Pink family, selected from the group consisting of the species sticky catchfly (*Viscaria vulgaris*), meadow campion (*Lychnis flos-cuculi*), red campion, night-flowering campion, superb pink, clusterhead pink and bladder campion, and (b) alfalfa species, in the form of a pulverulent mixture, where the proportion by weight of the powder originating from the Pink species is greater than 80%, but less than 99%, obtainable by the following steps (i) - (vi), where steps (i) to (v) are carried out separately for each of the plant species (a) and (b):
*(i)* grinding of the dried plants, plant parts or seeds,
*(ii)* take-up of the ground material in a polar, organic solvent,
*(iii)* performance of stirred extraction of the suspension obtained in this way,
*(iv)* evaporation of the solvent without prior separation of the solid phase from the soluble phase having been carried out,
*(v)* drying of the residue, and
*(vi)* mixing of the two pulverulent products obtained in steps (i) to (v) for each plant species in the desired ratio.

2. Preparation according to Claim 2, **characterized in that** the proportion by weight of the powder which originates from the Pink species is 90 - 98%.

3. Preparation according to Claim 3, **characterized in that** the ratio by weight of powder from the Pink species to powder from the alfalfa species is 95 to 5.

4. Preparation according to one or more of Claims 1 to 3, **characterized in that** the plant material employed originates from wild forms unaffected by cultivation which have preferably grown without treatment with mineral fertilizers and/or pesticides.

5. Preparation according to one or more of Claims 1 to 4, **characterized in that** the seeds of the corresponding plants are used.

6. Preparation according to one or more of Claims 1 to 5, **characterized in that** it comprises compounds from the group consisting of the brassinosteroids.

7. Preparation according to Claim 6, **characterized in that** it comprises 24-epi-secasterone and/or 24-epi-castasterone.

8. Preparation according to one or more of Claims 1 to 7, **characterized in that** it additionally comprises solid, pulverulent carrier materials or fillers.

9. Preparation according to Claim 8, **characterized in that** the proportion by weight of the mixed powder originating from the plants is from 2 to 8%, based on the filler/carrier material.

10. Preparation according to one or more of Claims 1 to 10, **characterized in that** it additionally comprises additives which augment or regulate the effect.

11. Preparation according to one or more of Claims 1 to 10, obtainable by a process step according to one or more of Claims 15 to 24.

12. Preparation in the form of an aqueous suspension based on the pulverulent preparation according to Claims 1 to 11.

13. Preparation according to Claim 12, where the concentration of the mixed powder originating from the plants is from 0.1 mg to 2 mg/l.

14. Preparation according to Claim 13, where the concentration of the mixed powder originating from the plants is from 0.5 mg to 1.0 mg/l.

15. Process for the preparation of a pulverulent or aqueous preparation according to Claims 1 to 14 which is suitable for biological plant protection, **characterized in that** the following steps are carried out, where steps (i) to (v) are carried out separately for each of the plant species (a) and (b):
*(i)* grinding of the dried plants, plant parts or seeds,
*(ii)* uptake of the ground material in a polar, organic solvent,
*(iii)* performance of stirred extraction of the suspension obtained in this way,
*(iv)* evaporation of the solvent without prior separation of the solid phase from the soluble phase having been carried out,
*(v)* drying of the residue,
*(vi)* mixing of the two pulverulent products obtained in steps (i) to (v) for each plant species (a) and (b) in the desired ratio to give a mixed powder, and in the case of the preparation of an aqueous preparation of Claims 12 to 14,
(vii) suspension of the resultant mixed powder from (vi) in water in the proposed concentration.

16. Process according to Claim 15, **characterized in that** ground plant material having an average grain size of between 0.1 and 0.2 mm is employed for further processing.

17. Process according to Claim 15 or 16, **characterized in that** from 1.5 to 2 parts by volume of solvent are employed per part by volume of ground powder for the stirred extraction.

18. Process according to one or more of Claims 15 to 17, **characterized in that** the solvent employed is non-denatured 98-100% ethanol.

19. Process according to one or more of Claims 15 to 18, **characterized in that** the stirred extraction is carried out for a duration of from about 96 to 120 hours.

20. Process according to one or more of Claims 15 to 19, **characterized in that** each of the process steps is carried out at a temperature between 15 and 40°C.

21. Process according to one or more of Claims 15 to 20, **characterized in that** dried powder having a water content of less than 10% is employed for the further processing in step (vi).

22. Process according to one or more of Claims 15 to 21, **characterized in that** the ratio by weight of powder from Pink species to powder from alfalfa species in the resultant mixed powder is 95 to 5.

23. Process according to one or more of Claims 15 to 22, **characterized in that** the plant material employed originates from wild forms unaffected by cultivation which have preferably grown without treatment with mineral fertilizers and/or pesticides.

24. Process according to one or more of Claims 15 to 23, **characterized in that** the mixed powder obtained in step (vi) is additionally mixed with a solid, pulverulent carrier material or filler.

25. Use of a preparation according to one or more of Claims 1 to 14 as biological plant-protection composition.

## Revendications

1. Préparation à base de plantes, de parties de plantes ou de graines issues (a) de la famille des oeillets, choisies parmi le groupe constitué par les espèces de lychnis visqueux (*Viscaria vulgaris*), de silène fleur-de-coucou (*Lychnis flos-cuculi*), de compagnon-rouge, de silène noctiflore, d'oeillet superbe, d'oeillet des chartreux et de la silène enflée, et (b) des espèces de luzerne, sous la forme d'un mélange pulvérulent, où la proportion en poids de la poudre issue de l'espèce d'oeillet est supérieure à 80%, mais inférieure à 99%, pouvant être obtenue par les étapes (i) - (vi) suivantes, où les étapes (i) à (v) sont réalisées séparément pour chacune des espèces de plante (a) et (b) :
*(i)* broyage des plantes, parties de plantes ou graines sèches,
*(ii)* reprise du matériau broyé dans un solvant organique polaire,
*(iii)* réalisation d'une extraction sous agitation de la suspension ainsi obtenue,
*(iv)* évaporation du solvant sans séparation préalable de la phase solide depuis la phase soluble,
*(v)* séchage du résidu, et
*(vi)* mélange des deux produits pulvérulents obtenus aux étapes (i) à (v) pour chaque espèce de plante dans le rapport désiré.

2. Préparation selon la revendication 2, **caractérisée en ce que** la proportion en poids de la poudre issue de l'espèce d'oeillet est de 90 - 98%.

3. Préparation selon la revendication 3, **caractérisée en ce que** le rapport pondéral de la poudre issue de l'espèce d'oeillet à la poudre issue de l'espèce de luzerne va de 95 à 5.

4. Préparation selon une ou plusieurs parmi les revendications 1 à 3, **caractérisée en ce que** le matériau végétal employé est issu de formes sauvages non modifiées par la culture, dont la croissance s'est déroulée de préférence sans traitement par des fertilisants minéraux et/ou des pesticides.

5. Préparation selon une ou plusieurs parmi les revendications 1 à 4, **caractérisée en ce que** les graines des plantes correspondantes sont utilisées.

6. Préparation selon une ou plusieurs parmi les revendications 1 à 5, **caractérisée en ce qu'**elle comprend des composés du groupe constitué par les brassino-stéroïdes.

7. Préparation selon la revendication 6, **caractérisée en ce qu'**elle comprend de la 24-épi-sécastérone et/ou de la 24-épi-castastérone.

8. Préparation selon une ou plusieurs parmi les revendications 1 à 7, **caractérisée en ce qu'**elle comprend en outre des matériaux de véhicule ou des charges pulvérulents et solides.

9. Préparation selon la revendication 8, **caractérisée en ce que** la proportion en poids de la poudre mixte issue des plantes va de 2 à 8%, sur la base de la charge/matériau de véhicule.

10. Préparation selon une ou plusieurs parmi les revendications 1 à 10, **caractérisée en ce qu'**elle comprend en outre des additifs qui augmentent ou régulent l'effet.

11. Préparation selon une ou plusieurs parmi les revendications 1 à 10, pouvant être obtenue par une étape de procédé selon une ou plusieurs parmi les revendications 15 à 24.

12. Préparation sous la forme d'une suspension aqueuse à base de la préparation pulvérulente selon les revendications 1 à 11.

13. Préparation selon la revendication 12, dans laquelle la concentration en poudre mixte issue des plantes va de 0, 1 mg to 2 mg/l.

14. Préparation selon la revendication 13, dans laquelle la concentration en poudre mixte issue des plantes va de 0,5 mg à 1,0 mg/l.

15. Procédé de préparation d'une préparation pulvérulente ou aqueuse selon les revendications 1 à 14, qui est convenable pour une phytoprotection biologique, **caractérisé en ce que** les étapes suivantes sont réalisées, où les étapes (i) à (v) sont réalisées séparément pour chacune des espèces de plante (a) et (b) :
*(i)* broyage des plantes, parties de plantes ou graines sèches,
*(ii)* reprise du matériau broyé dans un solvant organique polaire,
*(iii)* réalisation d'une extraction sous agitation de la suspension ainsi obtenue,
*(iv)* évaporation du solvant sans séparation préalable de la phase solide depuis la phase soluble,
*(v)* séchage du résidu,
*(vi)* mélange des deux produits pulvérulents obtenus aux étapes (i) à (v) pour chaque espèce de plante (a) et (b) en un rapport désiré pour donner une poudre mixte, et
dans le cas de la préparation d'une préparation aqueuse selon les revendications 12 à 14,
*(vii)* suspension de la poudre mixte résultante issue de (vi) dans l'eau et en la concentration proposée.

16. Procédé selon la revendication 15, **caractérisé en ce que** le matériau végétal broyé ayant une taille de grain moyenne comprise entre 0,1 et 0,2 mm est employé pour un traitement supplémentaire.

17. Procédé selon la revendication 15 ou 16, **caractérisé en ce que** de 1,5 à 2 parties en volume de solvant sont employées par partie en volume de poudre broyée pour l'extraction sous agitation.

18. Procédé selon une ou plusieurs parmi les revendications 15 à 17, **caractérisé en ce que** le solvant employé est de l'éthanol à 98-100% non dénaturé.

19. Procédé selon une ou plusieurs parmi les revendications 15 à 18, **caractérisé en ce que** l'extraction sous agitation est réalisée pendant une durée allant d'environ 96 à 120 heures.

20. Procédé selon une ou plusieurs parmi les revendications 15 à 19, **caractérisé en ce que** chacune des étapes du procédé est réalisée à une température comprise entre 15 et 40°C.

21. Procédé selon une ou plusieurs parmi les revendications 15 à 20, **caractérisé en ce que** de la poudre séchée ayant une teneur en eau inférieure à 10% est employée pour le traitement supplémentaire dans l'étape (vi).

22. Procédé selon une ou plusieurs parmi les revendications 15 à 21, **caractérisé en ce que** le rapport pondéral de la poudre issue de l'espèce d'oeillet à la poudre issue de l'espèce de luzerne dans la poudre mixte obtenue va de 95 à 5.

23. Procédé selon une ou plusieurs parmi les revendications 15 à 22, **caractérisé en ce que** le matériau végétal employé est issu de formes sauvages non modifiées par la culture, dont la croissance s'est déroulée de préférence sans traitement par des fertilisants minéraux et/ou des pesticides.

24. Procédé selon une ou plusieurs parmi les revendications 15 à 23, **caractérisé en ce que** la poudre mixte obtenue à l'étape (vi) est mélangée en outre avec un matériau de véhicule ou une charge solide et pulvérulent.

25. Utilisation d'une préparation selon une ou plusieurs parmi les revendications 1 à 14, comme composition de phytoprotection biologique.
